# EUROPEAN PATENT APPLICATION

(11) **EP 2 868 248 A1**
(43) Date of publication of application: **06.05.2015**
(21) Application number: 13191316.2
(22) Date of filing: 01.11.2013
(51) Int. Cl.: A47K 3/40, B29C 39/14, B29C 43/14, B29C 67/24, C04B 26/06, C04B 20/10, B32B 27/14

(54) **Molded products conglomerate and method of their production**

(71) Applicant: Przedsiebiorstwo Produkcyjno-Handlowo-Uslugowe "CENTRUM" Sp. z o.o., 33-300 Nowy Sacz (PL)
(72) Inventor: Popiela, Rafa, 33-300 Nowy Sacz (PL)
(74) Representative: Fiolka, Janusz

(57) **Abstract**

The invention relates to products manufactured of marble conglomerate, wherein the top and bottom halves of the product are made of a mouldable plastic, preferably acrylic or ABS, with a conglomerate used as a filling agent, preferably a marble conglomerate, or other filler material.

## Description

The present invention relates to conglomerate-poured products, or other filling substances, and their production methods.

ABS and acrylic moulded resin-reinforced fibre glass shower trays have been manufactured for years now.

There also exist products made of marble conglomerate, such as shower trays and wash basins with gelcoat polymer top layers. Marble conglomerate consists of 82% calcium carbonate and 18% polyester resin. Its mass is a light gray colour, and is thoroughly degassed, with no air bubbles remaining.

Gelcoat-coated products have a rough, course surface, which does not look good from an aesthetic point of view and is difficult to keep clean. Therefore, marble conglomerate articles in the final manufacturing process must be polished to a smooth finish.

In the conglomerate manufacturing process, the surface polishing process takes a very long time. This is a production bottleneck, and significantly increases production costs.

The aim of the present invention is to eliminate these disadvantages by manufacturing conglomerate products in a different way: acrylic or ABS parts are moulded first, and then filled with conglomerate, usually marble conglomerate. As a result, the production time for individual products is reduced, as it becomes unnecessary to polish the surfaces. Furthermore, an even surface quality is achieved right away, greatly increasing aesthetic value. Additionally, the smooth surface of the acrylic or ABS moulding is easy to clean. As a home improvement item, the end product's aesthetics and easy-to-clean properties are highly valuable, as appearance is one of the basic criteria guiding potential customers. A customer purchasing a product made according to the present invention will be attracted to the smooth, aesthetic look of both its top and bottom surfaces.

Additionally, manufacturing of a three-layer product allows for increased weight reduction, and thus a reduction of the amount of raw materials needed to produce a given product. Products made from three different layers are also more rigid compare to two-layered items.

### Embodiment

Conglomerate-made shower trays are manufactured by initially thermally moulding the top and bottom parts of an acrylic product, using a form. The resulting product mould is then filled with marble conglomerate.

## Claims

1. Marble conglomerate products, wherein the top and bottom halves of the product are made of mouldable plastic, preferably acrylic or ABS, with conglomerate as a filling agent - preferably marble conglomerate, or other filler materials.

2. Products manufactured according to the method given in Claim 1, wherein moulds are made of the top and bottom halves, and then filled with a conglomerate or other filler material.
